(19) Europäisches Patentamt / European Patent Office / Office européen des brevets

(11) **EP 3 721 248 B1**

(12) **FASCICULE DE BREVET EUROPEEN**

(45) Date de publication et mention de la délivrance du brevet:
**03.08.2022 Bulletin 2022/31**

(21) Numéro de dépôt: **18836833.6**

(22) Date de dépôt: **04.12.2018**

(51) Classification Internationale des Brevets (IPC):
*G01S 3/80* *(2006.01)*    *H04N 5/232* *(2006.01)*
*H04N 7/15* *(2006.01)*    *G10L 25/27* *(2013.01)*
*H04R 3/00* *(2006.01)*    *G01S 3/786* *(2006.01)*
*H04N 7/14* *(2006.01)*    *G10L 21/0272* *(2013.01)*
*G10L 21/0216* *(2013.01)*

(52) Classification Coopérative des Brevets (CPC):
**G10L 25/27; G01S 3/7864; H04N 5/23296;
H04N 7/142; H04N 7/147; H04R 3/005;**
G10L 21/0272; G10L 2021/02166

(86) Numéro de dépôt international:
**PCT/FR2018/053097**

(87) Numéro de publication internationale:
**WO 2019/110913 (13.06.2019 Gazette 2019/24)**

(54) **TRAITEMENT DE DONNÉES D'UNE SÉQUENCE VIDÉO POUR UN ZOOM SUR UN LOCUTEUR DÉTECTÉ DANS LA SÉQUENCE**

VERARBEITUNG VON DATEN EINER VIDEOSEQUENZ ZUM HERANZOOMEN EINES IN DER SEQUENZ ERKANNTEN SPRECHERS

PROCESSING OF DATA OF A VIDEO SEQUENCE IN ORDER TO ZOOM ON A SPEAKER DETECTED IN THE SEQUENCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2017 FR 1761643**

(43) Date de publication de la demande:
**14.10.2020 Bulletin 2020/42**

(73) Titulaire: **Orange**
**92130 Issy-les-Moulineaux (FR)**

(72) Inventeurs:
• **ZIELINSKI, Andrzej**
**92326 Châtillon Cedex (FR)**
• **WARZOCHA, Robert**
**92326 Châtillon Cedex (FR)**
• **KOLODYNSKI, Robert**
**92326 Châtillon Cedex (FR)**
• **RAGOT, Stéphane**
**92326 Châtillon Cedex (FR)**
• **DANIEL, Jérôme**
**92326 Châtillon Cedex (FR)**
• **EMERIT, Marc**
**92326 Châtillon Cedex (FR)**

(74) Mandataire: **Plasseraud IP**
**66, rue de la Chaussée d'Antin**
**75440 Paris Cedex 09 (FR)**

(56) Documents cités:
**EP-A1- 2 375 741**    **EP-A1- 2 765 791**
**WO-A1-2004/100546**    **WO-A1-2009/152158**
**WO-A2-02/079792**    **CN-A- 1 997 161**

EP 3 721 248 B1

**Description**

La présente invention concerne le traitement des données de séquences vidéo, par exemple de signaux de vidéoconférence issus de webcam, en particulier pour effectuer en temps réel (ou quasi-réel) un zoom sur une zone dans laquelle un locuteur est reconnu comme actif.

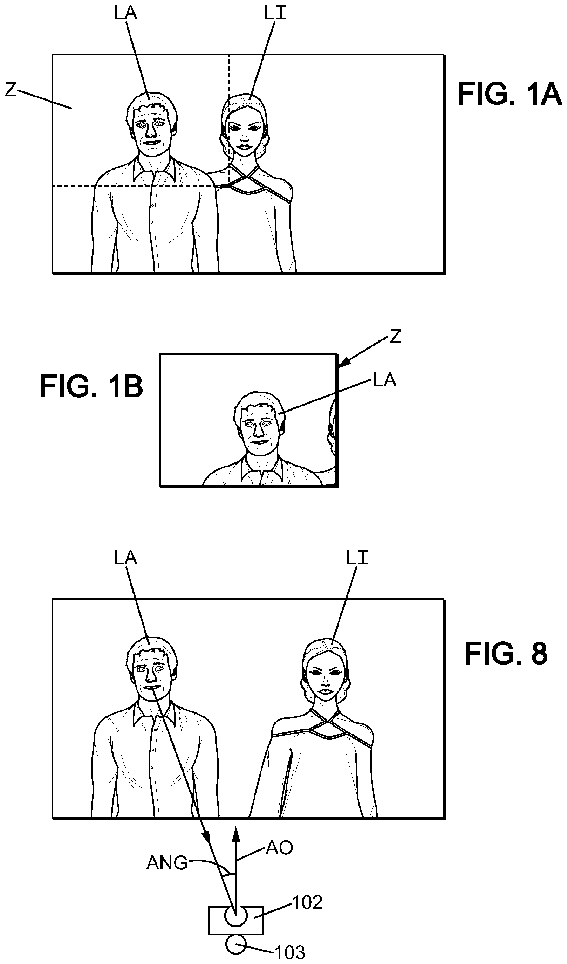

En référence à la figure 1A, il est présenté à titre d'exemple deux interlocuteurs LA et LI d'un utilisateur recevant les images d'une webcam distante et filmant ces deux interlocuteurs LA et LI. L'interlocuteur LA est actif, tandis que l'autre interlocuteur LI n'émet aucun son. Il est recherché alors à effectuer un zoom dans la zone Z des images successives pour montrer en particulier le visage par exemple, ou encore le buste, du locuteur actif LA qui se situe dans cette zone Z, comme illustré sur la figure 1B.

On connaît des techniques pour obtenir une telle fonctionnalité. À titre d'exemple, une technique consiste à utiliser deux caméras, l'une pour effectuer le zoom dans les images qu'elle acquiert (comme illustré sur les figures 1A et 1B), et une autre caméra pour détecter en particulier les mouvements des lèvres des personnes filmées et effectuer alors le zoom sur le visage dont les lèvres sont en mouvement. Toutefois, une telle réalisation nécessite deux caméras, donc une addition de matériel qui peut résulter un coût associé. Par ailleurs, en termes de robustesse, si les visages sont loin de la caméra, il est difficile de détecter un mouvement de lèvres de façon satisfaisante.

Il est aussi connu des demandes de brevets WO2004/100546A1 et EP2375741A1 des techniques de détection de la direction d'un locuteur permettant de contrôler le champs visuel transmis.

La présente invention vient améliorer la situation.

Elle propose à cet effet un procédé de traitement d'une séquence vidéo comportant une succession d'images d'un ou plusieurs locuteurs acquises par une caméra grand angle, le procédé comportant :

- Une acquisition sonore à partir d'un microphone comportant une pluralité de capteurs pour capter un champ sonore ;
- Un traitement des données sonores acquises par le microphone pour déterminer au moins une valeur d'angle estimée entre la direction de propagation de son issu d'un locuteur et l'axe optique de la caméra grand angle;
- Une génération d'un signal comportant des données de ladite valeur d'angle ajoutées à un flux de données vidéo et sonores acquises par le microphone et la caméra;
- La transmission par un dispositif émetteur à un dispositif récepteur du signal généré;
- Une exploitation dudit signal par le dispositif récepteur lors d'une restitution des données vidéo et sonores reçues en appliquant un zoom sur une zone autour du locuteur émettant le son, en utilisant les données de ladite valeur d'angle.

On entend par « locuteurs » au sens général, toute personne susceptible de produire un son, de parole par exemple, ou encore un son de musique, ou autres.

Enfin, on entend par caméra « à grand angle » tout d'abord la possibilité d'effectuer un zoom numérique dans les images acquises par la caméra, au moment de la restitution de ces images sur un écran. Néanmoins, le terme englobe plus généralement aussi la possibilité d'une caméra mobile, capable de se focaliser et/ou de s'orienter en rotation dans une direction correspondant à celle de la propagation du son.

Le microphone précité peut être de type ambiophonique.

Le terme « ambiophonique» est ici à interpréter en relation avec le traitement dit d'« encodage et de traitement dans le domaine ambisonique » permettant la détermination d'une direction de provenance du son issu d'une source, et ce possiblement pour plusieurs sources à la fois. Le microphone lui-même peut être par exemple de type « sphérique » et comporter une pluralité de capteurs tels que des capsules piézoélectriques par exemple comme illustré dans le document WO-2005/015954 (référence S de la figure 1). Il peut alors être prévu en aval du microphone un traitement des données sonores acquises pour obtenir une représentation de la scène sonore et plus particulièrement une direction de propagation d'un son relativement à au moins un axe donné, ce son étant issu d'une source sonore principalement active (par rapport à d'autres sources ou seule dans la scène sonore). L'obtention de cette direction de propagation peut s'effectuer par exemple par une technique de séparation de sources (notamment de séparation de sources « aveugle ») et d'identification des directions de propagation des sources détectées. L'obtention de la ou des directions de propagation peut s'effectuer plus simplement par un traitement de type « beamforming » ou encore en analysant un signal audio multi-capteurs converti au format dit « B-format » et analysé selon la méthode DiRaC (pour « Directional Audio Coding ») où un vecteur intensité est calculé par bandes fréquentielles et des angles (azimut, élévation) peuvent être extraits.

Bien entendu, en cas d'identification de plusieurs locuteurs actifs (ou encore quand aucun locuteur actif n'est détecté dans une zone d'intérêt qui correspond typiquement au champ de vision de la webcam), il peut être prévu de dé-zoomer l'image pour avoir dans le champ de l'image plusieurs interlocuteurs à la fois (ou de façon générale la scène vidéo complète). Techniquement, il est en effet possible d'identifier plusieurs sources sonores et d'associer des angles respectifs à ces sources sonores afin de définir la largeur d'image nécessaire pour avoir dans le champ de l'image restituée tous les locuteurs dont l'activité a été détectée.

En variante d'un microphone ambiophonique du type précité, les capteurs qu'il comporte peuvent être agencés linéairement ou encore en tétraèdre, ou autre, pour, de façon générale, capter un champ sonore dont le traitement permet de déterminer la direction d'une source sonore, à la manière d'une « d'antenne de microphones » correspondant chacun à capteur. Dans une réalisation possible, les capteurs peuvent être distribués en discrétisant une sphère, en tétraèdre avec quatre capteurs pour un ordre 1, ou avec plus de capteurs pour un ordre ambisonique supérieur (dit HOA pour « High-Order Ambisonics »).

Ainsi, dans une réalisation, le procédé comporte un traitement du champ sonore capté par le microphone et représentatif d'une scène sonore comportant au moins une source sonore correspondant à un locuteur actif émettant un son dont la direction de propagation est déterminée relativement à l'axe optique de la caméra.

Le traitement du champ sonore peut comporter un traitement dit de « séparation de sources » (ou « séparation aveugle ») pour détecter la source précitée et déterminer la direction correspondante de propagation du son qu'elle émet.

En variante, on peut prévoir un traitement de type dit « de beamforming ». En particulier, il peut être avantageux de prévoir dans cette réalisation un traitement de maximisation d'énergie en fonction des multiples faisceaux captés par le microphone pour déterminer la direction de propagation du son issu de ladite source. Il convient de préciser ici que le « beamforming » sert en général à focaliser une antenne de microphone dans une direction (celle de la source) et ainsi améliorer le rapport son direct sur son réverbéré. Ici, cette technique peut être utilisée pour trouver la direction de propagation du son issu d'une source sur une grille de plusieurs directions possibles en cherchant la direction pour laquelle l'énergie est la plus importante.

Dans une autre variante, une analyse de scènes audio 3D de type DiRaC peut être utilisée pour obtenir la direction d'au moins une source.

Dans une réalisation, le microphone et la caméra sont placés à des positions respectives décalées spatialement l'une par rapport à l'autre, le procédé comportant une calibration préalable au traitement des données sonores (et éventuellement une compensation intégrée au traitement), pour corriger la zone d'image à zoomer en tenant compte du décalage spatial entre le microphone et la caméra.

Cette calibration (et compensation) peut comporter par exemple :

- la comparaison entre une position de visage d'un locuteur actif sur une image acquise par la caméra et la direction de propagation du son de ce locuteur actif, capté par le microphone,
- la détermination dudit décalage spatial en fonction de la comparaison, et la mémorisation d'une valeur du décalage spatial, pour tenir compte de ladite valeur de décalage pour définir la zone à zoomer.

On peut prévoir en outre une détection de forme et de taille de visage dans les images acquises par la caméra pendant la calibration (et la compensation) précitée(s).

Dans la réalisation où la caméra et le microphone acquièrent des données de vidéoconférence destinées à être transmises par un dispositif émetteur à destination d'un dispositif récepteur, le procédé comporte la détermination d'une valeur d'angle estimée entre la direction de propagation et l'axe optique de la caméra, et des données de ladite valeur d'angle sont alors ajoutées à un flux des données de vidéoconférence par le dispositif émetteur.

Cet ajout peut être effectué "dans la bande" (« inband » en anglais), c'est-à-dire en rajoutant les données d'angle comme des métadonnées intégrées au flux audio transmis, soit "hors bande" (« out of band » en anglais), en transmettant ces données d'angle comme un flux supplémentaire aux flux audio et vidéo, par exemple en envoyant ces données d'angle par le biais d'un "DataChannel" lors d'une communication audio-vidéo par la technologie WebRTC.

A la réception de ces données d'angle, le dispositif récepteur applique le zoom dans la zone du locuteur actif dans les données d'image reçues du dispositif émetteur, en utilisant les données de ladite valeur d'angle.

Les données de ladite valeur d'angle peuvent être transmises avec le flux de données de vidéoconférence, par exemple parmi des métadonnées.

Dans un mode de réalisation possible, exposé plus loin, les données de ladite valeur d'angle sont transmises avec le flux de données (dit "DataChannel") de vidéoconférence via un réseau de type réseau téléphonique commuté (dit « WebRTC »).

Dans un appel vidéo, la vidéo locale est souvent présentée comme une incrustation réduite (thumbnail en anglais) sur la vidéo distante. Dans un mode de réalisation possible de l'invention, le zoom dans la zone du locuteur actif peut être aussi appliqué sur la vidéo locale, de sorte que les participants en local visualisent la vidéo qui est réellement transmise à distance. Ainsi, dans un aspect non revendiqué, ce principe peut s'appliquer également au niveau du dispositif émetteur.

Dans une variante possible, le zoom sur la vidéo à émettre vers le dispositif distant peut être directement appliqué pour éviter d'avoir à réaliser le zoom auprès du dispositif récepteur et éviter ainsi de transmettre systématiquement les données d'angle, ainsi que la vidéo complète de la scène (grand angle). Une telle réalisation permet de réduire la bande passante nécessaire.

La présente invention vise aussi un dispositif émetteur selon la revendication 12.

La présente invention vise aussi un dispositif récepteur selon la revendication 13.

La présente invention vise aussi un programme selon la revendication 14.

D'autres avantages et caractéristiques de l'invention apparaîtront la lecture de la description d'exemples de réalisation détaillés ci-après, et à l'examen des dessins annexés sur lesquels :

- les figures 1A et 1B illustrent le principe d'un zoom sur un locuteur actif détecté dans une séquence vidéo,
- les figures 2A et 2B illustrent notamment la caméra grand angle et le microphone ambiophonique, précités, respectivement de face et de profil,
- la figure 3 illustre les principales étapes du procédé dans un exemple de réalisation de l'invention,
- la figure 4 illustre un premier dispositif 104 pour la mise en œuvre d'une partie au moins du procédé de la figure 3, pour l'acquisition et la transmission des données de vidéoconférence,
- la figure 5 illustre un deuxième dispositif (qui peut être identique au premier dispositif) pour la mise en œuvre d'une autre partie du procédé de la figure 3, pour la réception et la restitution des données de vidéoconférence,
- les figures 6a, 6b et 6c illustrent respectivement la direction de propagation dans un repère en coordonnées sphériques, puis cartésiennes pour la définition du zoom, et la relation entre la direction de propagation du son et la localisation de la zone d'image à zoomer,
- les figures 7a, 7b, et 7c illustrent le cas d'un décalage en azimut (hauteur d) entre la caméra 102 et le microphone 103,
- la figure 8 illustre l'angle ANG que forme la direction du son issu du locuteur actif LA avec l'axe optique AO de la caméra.

Ci-après, il est décrit une application de l'invention à l'acquisition, le traitement, la transmission/réception et le traitement pour restitution, en particulier de données de vidéoconférence. Néanmoins, la détermination de la direction de propagation du son issu d'un locuteur actif, au sens de l'invention, peut être mise en œuvre dans d'autres applications possibles, telles qu'un zoom automatique sur un locuteur actif dans un plateau de télévision, ou encore un zoom automatique sur un locuteur filmé pendant un tournage rapide (par exemple pour un reportage ou un film documentaire).

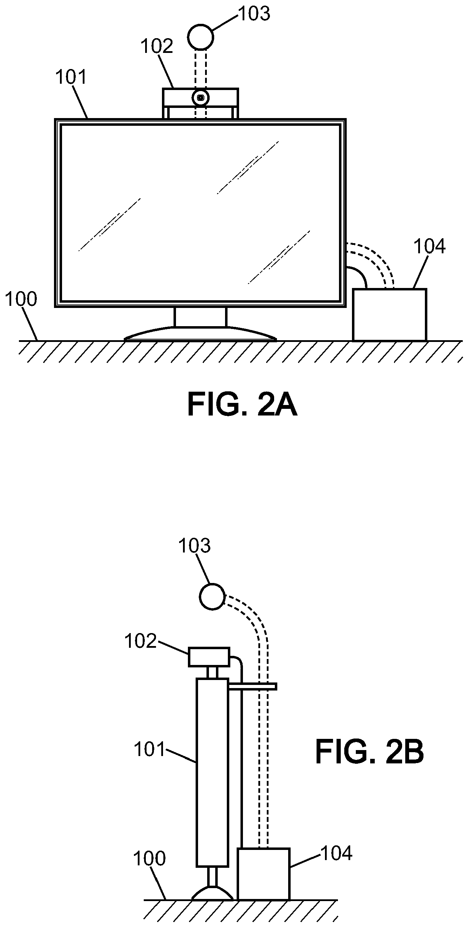

On se réfère tout d'abord à la figure 2A, sur laquelle est représentée de face une caméra à grand angle 102, ici de type webcam, connectée dans l'exemple représenté à un dispositif communicant 104 tel que par exemple un « décodeur vidéo » ou « set-top box », lui-même connecté à un téléviseur 101 et disposant d'une connexion réseau, par exemple par le biais d'une « box Internet ». Le téléviseur 101 porte la caméra 102 et un microphone ambiophonique 103 à proximité de la caméra. Le support 100 du téléviseur 101 est représenté ici pour illustrer que le microphone 103 a une position fixe par rapport à la caméra.

Idéalement, la position du microphone 103 coïncide (au moins à une plage de tolérance près) avec celle du centre optique de la caméra. Toutefois, cette réalisation est difficile à mettre en œuvre en pratique. Par ailleurs, il n'est pas recommandé d'accoler directement le microphone 103 à la caméra 102 en raison des réflexions sonores sur la caméra que pourrait capter le microphone.

Pour surmonter cette difficulté, il pourrait être prévu de concevoir le microphone sous la forme d'une ou de deux demi-coques sphériques de part et d'autre de la caméra, moyennant la prise en compte et la correction d'une dégradation possible des composantes ambisoniques captées.

Dans une réalisation alternative, il pourrait être prévu de corriger l'effet de la non-coïncidence de l'axe optique de la caméra avec la position du microphone en procédant à une calibration de la détection de la provenance du son. Par exemple, cette calibration peut être opérée en présentant à l'utilisateur de la caméra 102 son image sur le téléviseur 101 à laquelle on superpose un marqueur - par exemple un cercle de taille réduite et d'une couleur prédéterminée - et en lui demandant de parler tout en pointant par exemple avec une télécommande la position d'un marqueur sur l'image de sa bouche à l'écran, et ce en se positionnant à une distance de la caméra et du microphone à utiliser ultérieurement. Alternativement encore, la caméra peut procéder à une détection de visage pour identifier la direction du son et éventuellement déterminer (par régression à partir de la taille du visage détecté par exemple) la distance réelle entre le visage et la caméra, ce qui permet de corriger par des relations trigonométriques l'angle de propagation du son relativement à l'axe optique de la caméra.

Bien entendu, cette correction liée au défaut de coïncidence de la position du microphone avec l'axe optique ou le centre optique de la caméra est une réalisation optionnelle et tout au moins, en référence à la figure 8, il est obtenu finalement un angle ANG (corrigé ou non) que forme la direction du son issu du locuteur actif LA avec l'axe optique AO de la caméra 102. A cet effet, un traitement des données sonores acquises du microphone 103 est opéré (par exemple par séparation de sources dans la scène sonore captée par le microphone et détermination des directions de propagation du son issu de ces sources, ou encore plus simplement par une technique de considération de multiples faisceaux acoustiques et filtrage, de type « de beamforming », avec maximisation d'énergie en fonction des multiples faisceaux, pour laquelle le microphone ambiophonique ou plus généralement à plusieurs capteurs tels que des capsules piézoélectriques par exemple (agencées linéairement ou suivant plusieurs dimensions, par exemple en tétraèdre) peut être aussi bien utilisé). Dans des variantes de l'invention comme indiqué plus haut, on peut appliquer une méthode de séparation de source ou un analyse de type DiRaC sur un signal ambisonique au B-format.

Une fois ce traitement exécuté, il peut être prévu ensuite la transmission des données sonores acquises, des données d'images acquises, et des données de cette direction de source audio (ou des directions de sources audio dans le cas de plusieurs sources) par exemple sous la forme d'une (ou plusieurs) valeur(s) d'angle ANG.

À la réception des données de direction par un utilisateur distant, le décodeur vidéo peut lire la valeur d'angle ANG, effectuer un zoom dans la zone correspondant à cet angle dans les données d'images reçues et afficher l'image ainsi zoomée sur son écran de réception.

La valeur d'angle ANG peut être représentée par des données d'angle d'azimut et d'angle d'élévation par rapport à l'axe optique AO.

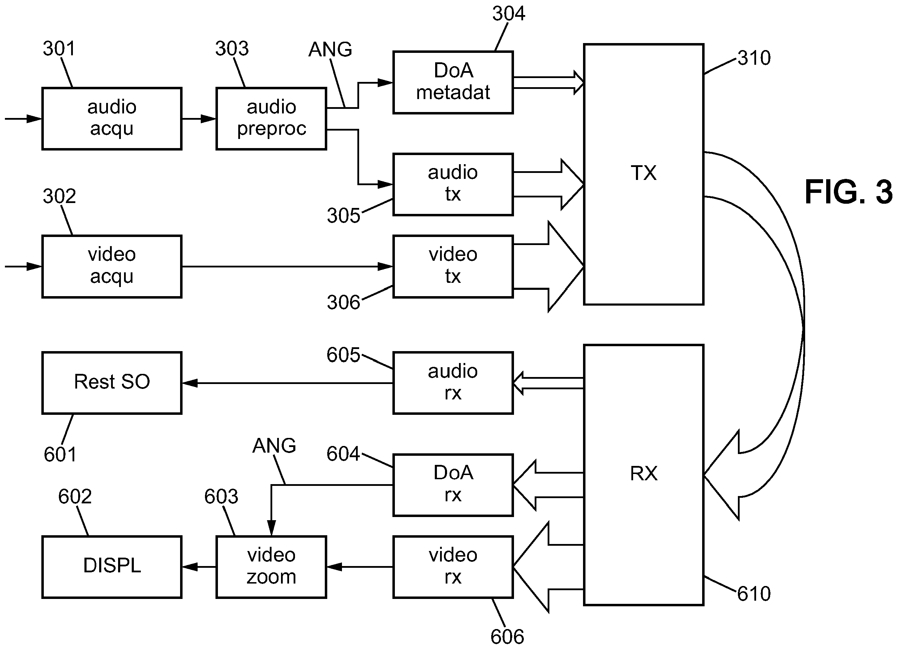

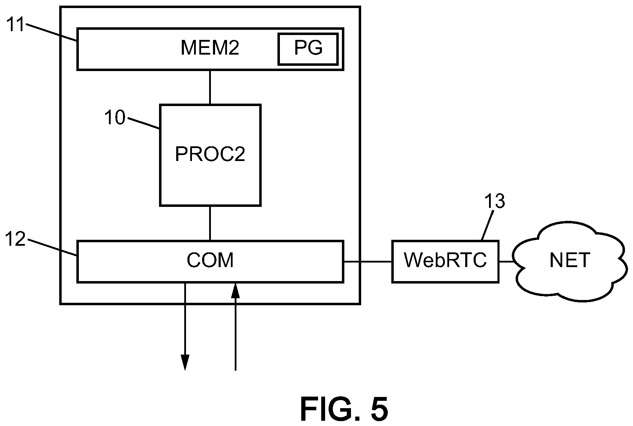

Ces étapes sont détaillées en référence à la figure 3, sur laquelle de premières étapes 301 et 302 consistent en l'acquisition sonore par le microphone ambiophonique 103 et respectivement en l'acquisition des données d'image par la caméra grand angle 102. L'acquisition des données sonores 301 est suivie d'un prétraitement sonore 303 pour déterminer l'angle ANG précité. Ici, la valeur de cet angle caractérisant la direction acoustique du locuteur actif relativement à l'axe optique de la caméra est transmise parmi des métadonnées à l'étape 304. En variante, ces données peuvent être intégrées dans le flux de données sonores acquises 305 (avec un en-tête approprié de déclaration de métadonnées par exemple). A l'étape 310, le flux de métadonnées, des données sonores acquises 305 et des données vidéo acquises 306 sont multiplexées pour être transmises via un réseau NET, par exemple un réseau IP avec un serveur Web hébergeant un service de type WebRTC (avec typiquement un serveur de signalisation supplémentaire pour l'échange des capacités média par le protocole SDP) illustré par la référence 13 de la figure 5).

Typiquement deux angles peuvent être transmis pour chaque source, en considérant les coordonnées sphériques à partir du point de référence du microphone. Il s'agit de l'azimut et l'élévation. Dans une réalisation simplifiée où des variations d'élévation ne sont pas pertinentes (par exemple quand les participants se trouvent assis autour d'une table de forme circulaire prédéterminée), seul l'azimut peut être calculé et transmis.

Dans un mode de réalisation, les données sonores et d'images sont transmises sur un réseau IP en utilisant la technologie WebRTC, qui repose sur un transport média par le protocole RTP (ou ses variantes sécurisées comme SRTP). Le développeur du service de vidéoconférence peut alors utiliser des briques logicielles de type API (typiquement en language JavaScript): 'PeerConnection' et 'GetUserMedia' de WebRTC, pour accéder à la caméra et établir les flux.

Un signal audio issu du traitement d'analyse de scène que capte le microphone inclut les données de direction et, quand la technologie WebRTC est utilisée, la transmission de ces données de direction peut se faire en utilisant l'API 'DataChannel' qui permet de transmettre des données, typiquement sous forme JSON (JavaScript Object Notation), donc avec un format structuré de type XML de la forme: {"azimuth" : theta, "elevation" : phi} où theta et phi correspondent aux valeurs (éventuellement entières, si elles sont exprimées en degrés) des angles de direction (azimut, élévation).

Lorsque plusieurs sources sont détectées dans la scène d'intérêt - typiquement limitée au champ de vision de la caméra - les données peuvent prendre la forme d'un tableau:

[ {"azimuth" : theta1, "elevation" : phi1}, {"azimuth" : theta2, "elevation" : phi2} ]

où theta1, phi1 sont les coordonnées de la source 1 et theta2, phi2 sont les coordonnées de la source 2.

Lorsqu'aucune source audio n'est détectée - typiquement dans le champ de vision de la caméra - on peut transmettre un tableau vide: [].

Un exemple de réalisation consiste à exécuter dans le bloc réalisant l'analyse de scène sonore une transmission locale de données de direction par le protocole OSC (Open Sound Control) vers un serveur Web local qui retransmet par un protocole Web de type WebSocket les données de direction vers le client Web gérant l'interface utilisateur d'accès au service de vidéoconférence. Dans une variante possible, les données de direction peuvent être transmises par d'autres méthodes, par exemple en transmettant ces données vers une carte son virtuelle sous la forme d'un signal audio "virtuel" et en accédant à cette carte son (par exemple en appelant l'API "GetUSerMedia" de WebRTC).

A la réception 610, les flux sont dé-multiplexés (voire décodés en compression) en :

- Un flux des données sonores 605,
- Un flux des données d'image 606, et
- Un flux des métadonnées 604 incluant alors la valeur de l'angle ANG, ce flux pouvant être intégré au flux de données sonores, ou transmis séparément (par exemple par un "DataChannel" selon la technologie WebRTC).

Cette dernière ANG sert alors à l'étape 603 pour :

- Déterminer une zone Z de présence d'un locuteur actif LA dans l'image dont les données sont reçues à l'étape 606,

- Effectuer un zoom numérique dans l'image dont les données sont reçues dans la zone Z ainsi déterminée.

L'image ainsi zoomée peut alors être affichée à l'étape 602 sur un téléviseur ou autre, avec en outre une restitution sonore 601 du son capté par le microphone 103. On comprendra ainsi que le microphone 103 sert non seulement à capter le son de la scène sonore illustrée sur la figure 1A mais aussi à déterminer l'angle ANG de la direction du son issu du locuteur actif LA.

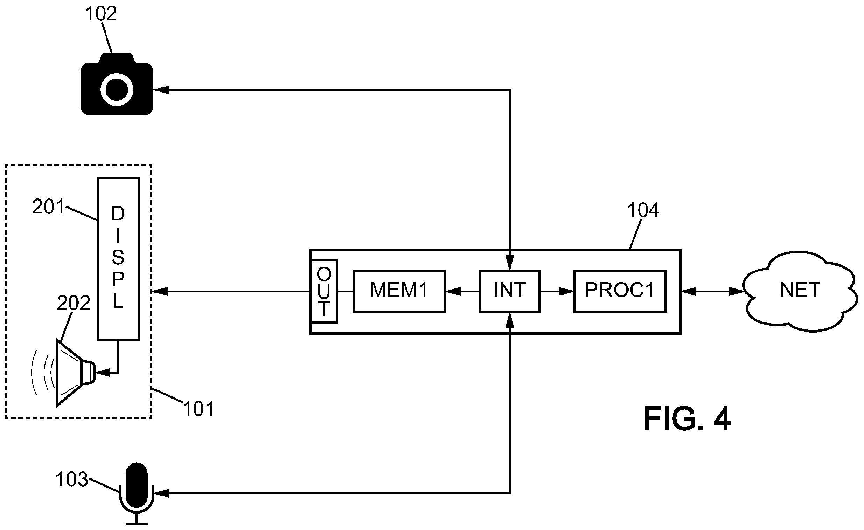

Les étapes de la figure 3 peuvent être mises en œuvre par l'exécution d'un programme informatique auprès du dispositif 104, pour la détermination de l'angle ANG et la transmission des données incluant la valeur de cet angle notamment. A ce titre, l'invention vise un tel programme informatique exécuté auprès du dispositif 104, ainsi que le dispositif 104 lui-même comportant un circuit de traitement incluant au moins, comme illustré sur la figure 4 :

- Une interface INT de réception des données d'image et sonores issues de la caméra 102 et du microphone 103,
- Un processeur PROC1 agencé pour lire et exécuter les instructions du programme informatique précité pour la mise en œuvre du procédé (au moins les étapes 301, 302, 303, 304, 305, 306, 310 typiquement de la figure 3), et
- Une mémoire MEM1 stockant au moins ces instructions.

Le dispositif 104 peut comporter en outre une interface de sortie OUT pour piloter un téléviseur 201 (et des moyens de restitution sonore 202 associés tel que des baffles, des écouteurs ou autres), afin d'afficher des images de la vidéoconférence en cours avec un ou plusieurs locuteurs distants, en effectuant aussi un zoom sur le locuteur distant qui est actif.

Ainsi, le dispositif 104 peut être agencé aussi pour effectuer ce zoom sur la base de la réception de la donnée d'angle ANG. De manière plus générale, la présente invention vise aussi un programme informatique exécuté auprès d'un dispositif (tel que le dispositif 104 par exemple), et comportant des instructions pour la mise en œuvre des étapes 610, 605, 604, 606, 603, 601 et 602 du procédé illustré sur la figure 3). Elle vise aussi le dispositif lui-même comportant un circuit de traitement pour exécuter ce programme et qui inclut, comme illustré sur la figure 5 :

- Une interface 12 de réception depuis le réseau 13, des données d'image, de son, et d'angle ANG,
- Un processeur 10 agencé pour lire et exécuter les instructions du programme informatique précité pour la mise en œuvre du procédé (au moins les étapes 610, 605, 604, 606, 603, 601 et 602), et
- Une mémoire 11 stockant au moins ces instructions.

Plus généralement, la présente invention vise un programme informatique global dont les instructions peuvent être réparties entre le dispositif émetteur de la figure 4 et le dispositif récepteur de la figure 5.

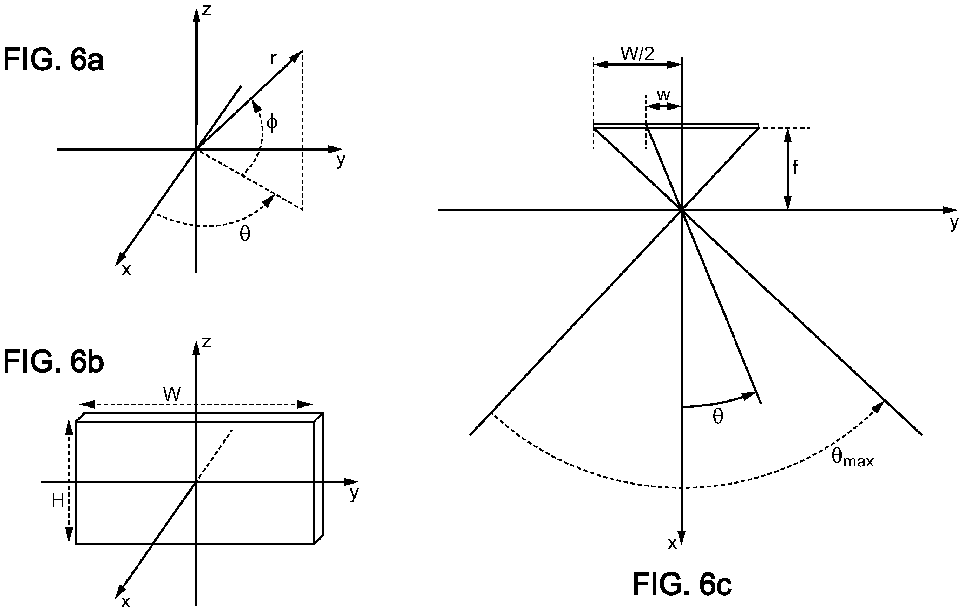

On détaille maintenant un premier cas de réalisation qui suppose que la caméra grand-angle 102 et le microphone 103 sont coïncidents. Dans ce cas les coordonnées sphériques de la source audio (r, theta, phi notées ci-après r, $\theta$, $\phi$) sont définies dans la même convention de système de coordonnées que la caméra. Cette convention est rappelée à la figure 6a.

La figure 6b rappelle quant à elle la convention du système de coordonnées en 3D avec le plan horizontal (x,y) et l'élévation selon l'axe z. On prend ici pour convention une origine au centre de l'image de taille WxH où W et H sont respectivement la largeur et la hauteur de l'image (en nombre de pixels). On rappelle dans le tableau ci-dessous les résolutions classiques en vidéo et imagerie TV:

| Résolution | WxH (nombre de pixels) |
| --- | --- |
| QVGA | 320x240 |
| VGA | 640x480 |
| HD (720p) | 1280x720 |
| Full HD (1080p) | 1920x1080 |
| UHD Ready | 2880x1620 |
| UHD (Quad HD) | 3840x2160 |

La figure 6c montre comment associer les coordonnées issues de l'analyse audio à une position sur l'image pour déterminer le point autour duquel le zoom doit être appliqué.

On suppose ici que le système de coordonnées de la caméra est centré sur le point central de l'image de largeur W et de hauteur H. La figure 6c ne représente que le plan horizontal (x,y) donné à la figure 6b.

On suppose ici que la caméra a un champ de vision (FOV pour « Field of View ») horizontal d'une valeur $\theta_{max}<180°$. On considère à titre d'exemple que $\theta_{max} = 90°$.

La largeur de l'image capturée par la caméra est W. Lorsqu'une source se situe à la limite du champ de vision, la position sur l'image est plus ou moins (+/-) W/2 selon que la source est à gauche ou à droite.

On suppose ici qu'une source active (reçue par le biais des informations de directions transmises) se situe à un azimut $\theta$ tel que $|\theta| \leq \theta_{max}/2$

On suppose ici que l'orientation de l'image est normale, et donc qu'une source située sur la droite a une coordonnée w<0. La position w sur l'image associée à une source audio d'azimut $\theta$ peut se calculer par trigonométrie en calculant:

$$\tan(\theta_{max}/2) = (W/2)/f$$

$$\tan(\theta) = w/f$$

où f est la distance focale de la caméra, ce qui permet d'obtenir:

$$w = -(W/2)\tan(\theta)/\tan(\theta_{max}/2)$$

Comme W correspond à un nombre (entier) de pixels, on pourra arrondir le résultat, en remplaçant w par:

$$w = -[ (W/2)\tan(\theta)/\tan(\theta_{max}/2) ]$$

où [x] représente l'arrondi à l'entier le plus proche de x.

Cependant, dans un mode de réalisation principal, on peut inverser l'axe x pour avoir une orientation "retournée" horizontalement ("flipped" ou "mirrored" en anglais), ce qui donne:

$$w = [ (W/2)\tan(\theta)/\tan(\theta_{max}/2) ]$$

Cette formule peut être simplifiée avec l'approximation suivante:

$$w = [ (W/2) / (\theta_{max}/2) . \theta]$$

Cette approximation revient à appliquer une relation linéaire entre la longueur de l'arc de cercle défini par les 2 angles $(\theta_{max}/2)$ et $\theta$ et la "projection" correspondant sur le plan de la caméra.

De la même façon et en supposant une image verticale retournée, pour une source d'élévation $\phi$, on peut déterminer la position verticale z (par rapport au centre de l'image) comme:

$$h = [ (H/2)\tan(\phi)/\tan(\phi_{max}/2) ]$$

où $\phi_{max}$ est le champ de vision vertical de la caméra (par exemple $\phi_{max} = 40°$).

Comme pour le cas horizontal, on peut aussi approximer cette valeur par:

$$h = [ (H/2) / (\phi_{max}/2) . \phi]$$

On suppose là encore que la source est dans le champ de vision de la caméra, donc $|\phi| \leq \phi_{max}/2$.

Ainsi à la réception 610-604 des métadonnées indiquant la position $(\theta,\phi)$ d'une source active, le zoom vidéo 603 peut être effectué comme suit.

Si une source est présente (dans la zone d'intérêt qui correspond typiquement au champ de vision de la caméra, voire dans une zone plus large):

- calculer w,h comme précédemment pour identifier la position autour de laquelle il faut zoomer

- fixer un facteur fac de zoom fixe (par exemple fac=2)

- réaliser le zoom avec les paramètres de position et de facteur de zoom précité, comme suit, par exemple par le biais d'instructions CSS3, comme suit:

- modification de style par une routine 'scale(fac)' sur l'élément HTML5 de la vidéo distance (appelé par exemple rv. style où rv désigne "remote video" et correspond à l'élément HTML de la vidéo distante),

- translation du style d'une balise de division HTML5 (typiquement notée "div") entourant la vidéo distante selon la position déterminée (w,h).

Si aucune source n'est présente (dans la zone d'intérêt correspondant par exemple au champ de vision de la caméra) ou si plusieurs sources sont présentes: dé-zoomer, ce qui revient à appliquer des instructions CSS3 pour fixer le facteur d'échelle à 1 et une translation à (0,0).

Dans une variante, le facteur de zoom peut être calculé en fonction d'une détection de visage et de dimensions apparentes de ce visage sur les images acquises, permettant de déterminer implicitement la distance de la source audio.

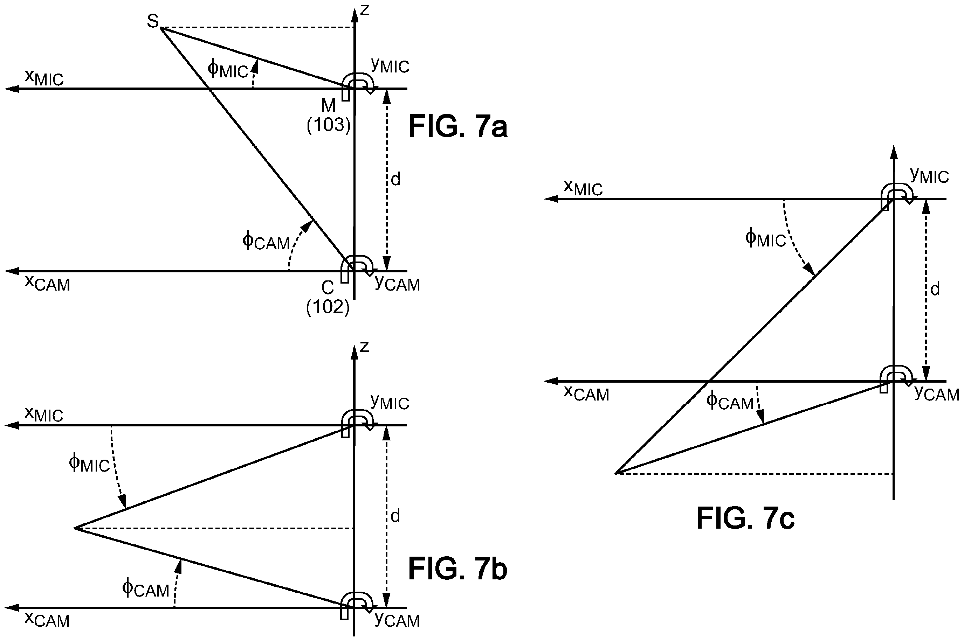

En référence maintenant aux figures 7a, 7b et 7c, on décrit maintenant un mode de réalisation dans lequel la caméra 102 et le microphone 103 ne sont coïncidents que pour l'azimut, mais qu'un décalage est présent en élévation. On note ci-après l'élévation déterminée par le microphone $\phi_{MIC}$ et l'élévation nécessaire au zoom de la vidéo $\phi_{CAM}$.

Si l'on ne dispose pas d'une information de distance, on peut effectuer une étape de calibration à l'aide d'une "mire" vidéo.

Si l'on dispose de la distance d entre le microphone 102 et la caméra 103 et d'une estimation d'une distance par exemple grâce à une détection de visage et une estimation par régression entre la taille du visage et la distance estimée dans l'image vidéo, on peut en déduire une correspondance.

Sur la Figure 7a, à partir du triangle défini par les points S (source audio), M (point de référence du microphone), C (point de référence de la caméra), on peut écrire à partir de la loi des sinus:

$$d/\sin(\phi_{CAM} - \phi_{MIC}) = d_{CAM}/\sin(\pi/2 + \phi_{MIC})$$

où d est la distance entre la caméra et le micro (entre C et M) et $d_{CAM}$ est la distance entre la source audio et la caméra (entre S et C). Cela donne:

$$\phi_{CAM} = \phi_{MIC} + \arcsin(d/d_{CAM} \cos(\phi_{MIC}))$$

Les autres figures 7b et 7c illustrent le même traitement. Il est donc possible de convertir l'angle $\phi_{MIC}$ estimé au point de référence du microphone, si l'on connaît les deux distances:

- distance d entre la caméra et le micro

- distance $d_{CAM}$ entre la source audio et la caméra

Cette triangulation est possible en combinant les informations de directions du microphone et de distance de la caméra.

Le même principe de compensation (triangulation) pourra s'appliquer si la caméra et le microphone se situent au même niveau (en termes d'élévation) et s'il existe un décalage en azimut. Dans ce cas, la compensation sera appliquée sur l'angle $\theta_{MIC}$ pour obtenir l'angle $\theta_{CAM}$.

On décrit ci-après un procédé de calibration qui permet d'obtenir la compensation précitée, avant d'établir l'appel ou pendant l'appel.

On peut d'abord utiliser une calibration statique qui suppose qu'un seul locuteur se trouve dans le champ de vision de la caméra (et dans la zone d'intérêt du microphone). On affiche l'angle $\phi_{MIC}$ (en degrés) estimé en temps-réel. On peut également de façon optionnelle détecter le visage du locuteur et calculer le "centre" de ce visage pour en déduire l'angle $\phi_{CAM}$ à partir de la formule:

$$h = [ (H/2)\tan(\phi)/\tan(\phi_{max}/2) ], \text{ soit } \phi = \arctan(h / (H/2) )$$

ou

$$h = [ (H/2) / (\phi_{max}/2) . \phi]$$

Pour une distance donnée à la caméra et au microphone et sans connaître la distance d, on peut ainsi compenser de façon fixe la différence $\phi_{CAM} - \phi_{MIC}$.

On peut aussi utiliser une calibration pour estimer de façon automatique la régression (par exemple par une technique dite de « machine learning » telle que par exemple une régression de type "random forest régression" ou un réseau de neurones artificiels) qui associe la taille d'un visage et la distance $d_{CAM}$. On suppose ici encore qu'un seul locuteur est présent dans le champ de vision de la caméra. Connaissant la distance d entre le microphone et la caméra, on peut enregistrer en temps-réel l'angle $\phi_{MIC}$, l'angle $\phi_{CAM}$ déduit à partir de la position centrale du visage et en déduire la distance estimée $d_{CAM}$ et enregistrer également la taille du visage (en terme de dimension d'une ellipse ou d'un rectangle entourant le visage).

## Revendications

1. Procédé de traitement d'une séquence vidéo comportant une succession d'images d'un ou plusieurs locuteurs, acquises par une caméra grand angle (102), le procédé comportant :

   - Une acquisition sonore à partir d'un microphone (103) comportant une pluralité de capteurs pour capter un champ sonore ;
   - Un traitement des données sonores acquises par le microphone (103) pour déterminer au moins une valeur d'angle (ANG) estimée entre la direction de propagation de son issu d'un locuteur (LA) et l'axe optique (AO) de la caméra grand angle; le procédé étant **caractérisé par**:
   - Une génération d'un signal (304) comportant des données de ladite valeur d'angle ajoutées à un flux des données vidéo et sonores acquises par la caméra et le microphone;
   - La transmission par un dispositif émetteur à un dispositif récepteur du signal généré ;
   - Une exploitation dudit signal par le dispositif récepteur lors d'une restitution des données vidéo et sonores reçues en appliquant un zoom sur une zone (Z) autour du locuteur (LA) émettant le son, en utilisant les données de ladite valeur d'angle .

2. Procédé selon la revendication 1, dans lequel le microphone (103) est de type ambiophonique.

3. Procédé selon l'une des revendications 1 et 2, comportant un traitement du champ sonore capté par le microphone et représentatif d'une scène sonore comportant au moins une source sonore correspondant à un locuteur actif émettant un son dont la direction de propagation est déterminée relativement à l'axe optique de la caméra.

4. Procédé selon la revendication 3, comportant un traitement de séparation de sources pour détecter ladite source et déterminer la direction correspondante de propagation du son.

5. Procédé selon la revendication 3, comportant un traitement de type dit « de beamforming » pour déterminer la direction de propagation du son issu de ladite source.

6. Procédé selon l'une des revendications précédentes, dans lequel le microphone et la caméra sont placés à des positions respectives décalées spatialement l'une par rapport à l'autre, le procédé comportant une calibration préalable au traitement des données sonores, pour corriger la zone d'image à zoomer en tenant compte du décalage spatial entre le microphone et la caméra.

7. Procédé selon la revendication 6, dans lequel ladite calibration comporte :

   - la comparaison entre une position de visage d'un locuteur actif sur une image acquise par la caméra et la direction de propagation du son de ce locuteur actif, capté par le microphone,
   - la détermination dudit décalage spatial en fonction de la comparaison, et la mémorisation d'une valeur du décalage spatial, pour tenir compte de ladite valeur de décalage pour définir la zone à zoomer.

8. Procédé selon la revendication 7, comportant une détection de forme de visage dans les images acquises par la caméra pendant ladite calibration.

9. Procédé selon l'une des revendications précédentes, dans lequel les données de ladite valeur d'angle sont transmises avec le flux de données vidéo et sonores parmi des métadonnées.

10. Procédé selon l'une des revendications précédentes, dans lequel les données de ladite valeur d'angle sont transmises avec le flux de données vidéo et sonores via un réseau de type réseau téléphonique commuté (13).

11. Procédé selon l'une des revendications précédentes, dans lequel le flux de données vidéo et sonores est un flux de données de vidéoconférence.

12. Dispositif émetteur comportant une caméra grand angle (102) et un microphone (103) comportant une pluralité de capteurs pour capter un champ sonore, la caméra et le microphone étant reliés à un circuit de traitement comportant une interface d'émission des données de ladite valeur d'angle avec le flux de données vidéo et sonores, et configuré pour la mise en œuvre des étapes d'acquisition sonore, de traitement des données sonores, de génération d'un signal et de transmission du signal généré selon la revendication 1 et de manière optionnelle, des étapes additionnelles de l'une des revendications 2-11; le dispositif étant **caractérisé par** la mise en œuvre desdites étapes de génération d'un signal et de transmission du signal généré.

13. Dispositif récepteur, comportant une interface (COM) de réception et un circuit de traitement des données de ladite valeur d'angle reçues avec le flux de données vidéo et sonores, caractérisé en étant configuré pour la mise en œuvre de l'étape :

    - exploitation dudit signal par le dispositif récepteur, pour exploiter ladite valeur d'angle dans une restitution des images vidéo et sonores en appliquant un zoom sur une zone (Z) autour du locuteur (LA) émettant le son dont la direction de provenance correspond auxdites données de valeur d'angle,

    du procédé selon l'une des revendications 1 à 11.

14. Programme informatique, comportant des instructions pour la mise en œuvre du procédé selon l'une des revendications 1 à 11 lorsque les instructions sont exécutées par un processeur d'un circuit de traitement.

**Patentansprüche**

1. Verfahren zur Verarbeitung einer Videosequenz, die eine Folge von Bildern eines oder mehrerer Sprecher aufweist, die von einer Weitwinkelkamera (102) erfasst werden, wobei das Verfahren aufweist:

    - eine Tonerfassung ausgehend von einem Mikrofon (103), das eine Vielzahl von Sensoren aufweist, um ein Tonfeld aufzufangen;
    - eine Verarbeitung der vom Mikrofon (103) erfassten Tondaten, um mindestens einen geschätzten Winkelwert (ANG) zwischen der Ausbreitungsrichtung eines von einem Sprecher (LA) stammenden Tons und der optischen Achse (AO) der Weitwinkelkamera zu bestimmen;

    wobei das Verfahren **gekennzeichnet ist durch**:

    - eine Erzeugung eines Signals (304), das zu einem Strom der von der Kamera und vom Mikrofon erfassten Video- und Tondaten hinzugefügte Daten des Winkelwerts aufweist;
    - die Übertragung des erzeugten Signals **durch** eine Sendevorrichtung an eine Empfangsvorrichtung;
    - eine Auswertung des Signals **durch** die Empfangsvorrichtung bei einer Wiedergabe der empfangenen Video- und Tondaten **durch** Anwendung eines Zooms auf einen Bereich (Z) um den den Ton von sich gebenden Sprecher (LA) herum, unter Verwendung der Daten des Winkelwerts.

2. Verfahren nach Anspruch 1, wobei das Mikrofon (103) vom Surround-Typ ist.

3. Verfahren nach einem der Ansprüche 1 und 2, das eine Verarbeitung des Tonfelds aufweist, das vom Mikrofon aufgefangen wird und für eine Tonszene repräsentativ ist, die mindestens eine Tonquelle aufweist, die einem aktiven Sprecher entspricht, der einen Ton von sich gibt, dessen Ausbreitungsrichtung bezüglich der optischen Achse der Kamera bestimmt wird.

4. Verfahren nach Anspruch 3, das eine Verarbeitung der Quellentrennung aufweist, um die Quelle zu erkennen und die entsprechende Ausbreitungsrichtung des Tons zu bestimmen.

5. Verfahren nach Anspruch 3, das eine Verarbeitung der Art "Beamforming" aufweist, um die Ausbreitungsrichtung des von der Quelle stammenden Tons zu bestimmen.

6. Verfahren nach einem der vorhergehenden Ansprüche, wobei das Mikrofon und die Kamera in räumlich zueinander versetzten Positionen platziert werden, wobei das Verfahren eine Kalibrierung vor der Verarbeitung der Tondaten aufweist, um den zu zoomenden Bildbereich unter Berücksichtigung des räumlichen Versatzes zwischen dem Mikrofon und der Kamera zu korrigieren.

7. Verfahren nach Anspruch 6, wobei die Kalibrierung aufweist:

- den Vergleich zwischen einer Gesichtsposition eines aktiven Sprechers in einem von der Kamera erfassten Bild und der Ausbreitungsrichtung des Tons dieses aktiven Sprechers, der vom Mikrofon aufgefangen wird,
- die Bestimmung des räumlichen Versatzes abhängig von dem Vergleich, und die Speicherung eines Werts des räumlichen Versatzes, um den Versatzwert für die Definition des zu zoomenden Bereichs zu berücksichtigen.

8. Verfahren nach Anspruch 7, das eine Gesichtsformerkennung in den von der Kamera erfassten Bildern während der Kalibrierung aufweist.

9. Verfahren nach einem der vorhergehenden Ansprüche, wobei die Daten des Winkelwerts mit dem Video- und Tondatenstrom unter Metadaten übertragen werden.

10. Verfahren nach einem der vorhergehenden Ansprüche, wobei die Daten des Winkelwerts mit dem Video- und Tondatenstrom über ein Netz von der Art Telefonwählnetz (13) übertragen werden.

11. Verfahren nach einem der vorhergehenden Ansprüche, wobei der Video- und Tondatenstrom ein Strom von Videokonferenzdaten ist.

12. Sendevorrichtung, die eine Weitwinkelkamera (102) und ein Mikrofon (103) aufweist, das eine Vielzahl von Sensoren aufweist, um ein Tonfeld aufzufangen, wobei die Kamera und das Mikrofon mit einer Verarbeitungsschaltung verbunden sind, die eine Sendeschnittstelle der Daten des Winkelwerts mit dem Video- und Tondatenstrom aufweist, und konfiguriert ist für die Durchführung der Schritte der Tonerfassung, der Verarbeitung der Tondaten, der Erzeugung eines Signals und der Übertragung des erzeugten Signals nach Anspruch 1 und optional zusätzlicher Schritte eines der Ansprüche 2-11; wobei die Vorrichtung durch die Durchführung der Schritte der Erzeugung eines Signals und der Übertragung des erzeugten Signals gekennzeichnet ist.

13. Empfangsvorrichtung, die eine Empfangsschnittstelle (COM) und eine Verarbeitungsschaltung der Daten des Winkelwerts aufweist, die mit dem Video- und Tondatenstrom empfangen werden, **dadurch gekennzeichnet, dass** sie für die Durchführung des Schritts:

- Auswertung des Signals durch die Empfangsvorrichtung, um den Winkelwert in einer Wiedergabe der Video- und Tonbilder auszuwerten, indem ein Zoom auf einen Bereich (Z) um den Sprecher (LA) herum angewendet wird, der den Ton von sich gibt, dessen Herkunftsrichtung den Winkelwertdaten entspricht,

des Verfahrens nach einem der Ansprüche 1 bis 11 konfiguriert ist.

14. EDV-Programm, das Anweisungen zur Durchführung des Verfahrens nach einem der Ansprüche 1 bis 11 aufweist, wenn die Anweisungen von einem Prozessor einer Verarbeitungsschaltung ausgeführt werden.

**Claims**

1. Method for processing a video sequence comprising a succession of images of one or more speakers, acquired by a wide-angle camera (102), the method comprising:

   - sound acquisition using a microphone (103) comprising a plurality of sensors for picking up a sound field;
   - processing of the sound data acquired by the microphone (103) in order to determine at least one estimated value of the angle (ANG) between the direction of propagation of the sound from a speaker (LA) and the optical axis (AO) of the wide-angle camera;

   the method being **characterized by**:

   - generation of a signal (304) comprising data on said angle value which are added to a stream of video and sound data acquired by the camera and the microphone;
   - transmission of the generated signal by a transmitter device to a receiver device;
   - use of said signal by the receiver device when rendering the received video and sound data in applying a zoom to a zone (Z) around the speaker (LA) issuing the sound by using the data on said angle value.

2. Method according to Claim 1, in which the microphone (103) is an ambiophonic microphone.

3. Method according to one of Claims 1 and 2, comprising processing of the sound field picked up by the microphone and representative of a sound scene comprising at least one sound source corresponding to an active speaker issuing a sound whose direction of propagation is determined relative to the optical axis of the camera.

4. Method according to Claim 3, comprising source separation processing in order to detect said source and determine the corresponding direction of sound propagation.

5. Method according to Claim 3, comprising beamforming processing in order to determine the direction of propagation of the sound from said source.

6. Method according to one of the preceding claims, in which the microphone and the camera are placed at respective positions that are spatially offset from one another, the method comprising calibration prior to the processing of the sound data in order to correct the image zone to be zoomed in on taking account of the spatial offset between the microphone and the camera.

7. Method according to Claim 6, in which said calibration comprises:

   - comparison between a position of the face of an active speaker in an image acquired by the camera and the direction of propagation of the sound from this active speaker picked up by the microphone,
   - determination of said spatial offset as a function of the comparison, and storage of a value of the spatial offset, in order to take account of said offset value to define the zone to be zoomed in on.

8. Method according to Claim 7, comprising detection of face shape in the images acquired by the camera during said calibration.

9. Method according to one of the preceding claims, in which the data on said angle value are transmitted with the stream of video and sound data among metadata.

10. Method according to one of the preceding claims, in which the data on said angle value are transmitted with the stream of video and sound data via a switched telephone network (13).

11. Method according to one of the preceding claims, in which the stream of video and sound data is a stream of videoconferencing data.

12. Transmitter device comprising a wide-angle camera (102) and a microphone (103) comprising a plurality of sensors for picking up a sound field, the camera and the microphone being connected to a processing circuit comprising an interface for transmitting data on said angle value with the stream of video and sound data, and configured to implement the steps of sound acquisition, of processing the sound data, of generating a signal and of transmitting the generated signal according to Claim 1 and, optionally, additional steps of one of Claims 2 to 11; the device being **characterized by** the implementation of said steps of generating a signal and of transmitting the generated signal.

13. Receiver device comprising a reception interface (COM)and a circuit for processing the data on said angle value which are received with the stream of video and sound data, **characterized in** being configured to implement the step of:

- the receiver device using said signal to use said angle value in rendering the sound and video images in applying a zoom to a zone (Z) around the speaker (LA) issuing the sound whose direction of origin corresponds to said angle value data,

of the method according to one of Claims 1 to 11.

14. Computer program comprising instructions for implementing the method according to one of Claims 1 to 11 when the instructions are executed by a processor of a processing circuit.

FIG. 1A

FIG. 1B

FIG. 8

**FIG. 2A**

**FIG. 2B**

FIG. 3

FIG. 4

FIG. 5

FIG. 6c

FIG. 6a

FIG. 6b

FIG. 7a

FIG. 7b

FIG. 7c

**EP 3 721 248 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004100546 A1
- EP 2375741 A1

- WO 2005015954 A